Europäisches Patentamt

European Patent Office

Office européen des brevets

(19)

(11) Veröffentlichungsnummer: **0 331 067**
**A2**

(12) ## EUROPÄISCHE PATENTANMELDUNG

(21) Anmeldenummer: 89103386.2

(22) Anmeldetag: 27.02.89

(51) Int. Cl.⁴: **B01D 13/01** , **F28F 21/06** ,
**F28F 9/00**

(30) Priorität: 02.03.88 DE 8802771 U

(43) Veröffentlichungstag der Anmeldung:
06.09.89 Patentblatt 89/36

(84) Benannte Vertragsstaaten:
AT BE CH DE ES FR GB GR IT LI LU NL SE

(71) Anmelder: Akzo N.V.
Postbus 9300 Velperweg 76
NL-6800 SB Arnhem(NL)

(72) Erfinder: Czernin, Peter
Frühlingstrasse 10
D-8767 Wörth(DE)
Erfinder: Gemeinhardt, Hermann
Rosenstrasse 32
D-8753 Obernburg(DE)
Erfinder: Hoff, Elmar
Südrand 11
D-4630 Bochum 6(DE)
Erfinder: Sticksel, Werner, Dr.
Friedhofstrasse 10
D-6453 Seligenstadt 2(DE)

(74) Vertreter: Fett, Günter
Akzo Patente GmbH Kasinostrasse 19 - 23
D-5600 Wuppertal 1(DE)

(54) **Stoff- und/oder Wärmetauscher.**

(57) Stoff- und/oder Wärmetauscher, bestehend aus einem Gehäuse und mehreren in diesem Gehäuse angeordneten Hohlfadenbündeln mit jeweils mindestens einem Rohrboden, wobei die Rohrböden der Hohlfadenbündel im Gehäuse derart angeordnet sind, daß im Gehäuse ein Außenraum um die Hohlfäden und ein Innenraum, der aus den Innenhohlräumen der Hohlfäden und einem von den Rohrböden und einem Teil des Gehäuses gebildeten Raum besteht, gebildet ist, und wobei im Gehäuse für den Außen- und Innenraum jeweils mindestens ein Flüssigkeitsanschluß vorgesehen ist, dadurch gekennzeichnet, daß die Außenkontur der Rohrböden vieleckig ausgebildet ist, wobei die Längskanten der Außenkontur benachbarter Rohrböden im wesentlichen parallel angeordnet sind, und daß über eine Abdichtung die Rohrböden dicht miteinander verbunden sind.

Fig. 2

## Stoff- und/oder Wärmetauscher

Die Erfindung bezieht sich auf Stoff- und/oder Wärmetauscher, die Hohlfadenbündel enthalten.

Hohlfadenbündel werden immer dann bei Stoff- und/oder Wärmetauschern verwendet, wenn große Tauscherflächen zum Stoff-und/oder Wärmeaustausch auf möglichst geringem Raum zur Verfügung gestellt werden sollen. Hierzu werden die Hohlfadenbündel in einen Rohrboden dicht eingebettet, wobei der Rohrboden dazu dient, eine dichte Trennung im Gehäuse zwischen Außen- und Innenraum der Hohlfäden herzustellen. Bei großen Tauscherflächen können mehrere tausend Hohlfäden erforderlich sein. Bei einer Anordnung von mehreren tausend Hohlfäden in einem einzigen Rohrboden wird die Herstellung kompliziert. Es ergibt sich eine vielfältige Produktpalette, die eine Erschwerung in der Qualitätskontrolle erbringt und die hinsichtlich einer automatischen Serienfertigung nicht gewünscht ist.

Deshalb ist man bereits dazu übergegangen, kleine Einheiten herzustellen und diese Einheiten je nach geforderter Tauscherfläche in Parallel- und/oder Hintereinanderschaltung zu kombinieren. Bei den bisher bekannt gewordenen Stoff-und/oder Wärmetauschern. bestehend aus einem Gehäuse und mehreren in diesem Gehäuse angeordneten Hohlfadenbündeln mit jeweils mindestens einem Rohrboden, wobei die Rohrböden der Hohlfadenbündel im Gehäuse derart angeordnet sind, daß im Gehäuse ein Außenraum um die Hohlfäden und ein Innenraum, der aus dem Innenhohlraum der Hohlfäden und einem von den Rohrböden und einem Teil des Gehäuses gebildeten Raum besteht, gebildet ist, und wobei im Gehäuse für den Außen- und Innenraum jeweils mindestens ein Flüssigkeitsanschluß vorgesehen ist, werden die Rohrböden in eine oder zwei Halteplatten dicht eingefügt.

Eine solche Anordnung erfordert beim Auswechseln der Hohlfadenbündel viel Zeit und genaues Arbeiten, insbesondere, weil die Dichtigkeit zwischen Rohrboden und Halteplatte gewährleistet sein muß. Aufgrund der für die Halteplatte erforderlichen Stabilität ergibt sich außerdem zwischen benachbarten Hohlfadenbündeln ein Freiraum, so daß bei den bekannten Stoff- und/oder Wärmetauschern mehr Volumen im Gehäuse sein muß, als dann, wenn alle Hohlfäden in einem einzigen Rohrboden untergebracht sind.

Es ist deshalb Aufgabe der vorliegenden Erfindung, die oben aufgeführten Nachteile zu vermeiden. Insbesondere sollen Stoff- und/oder Wärmetauscher, die aus einem Gehäuse und mehreren in diesem Gehäuse angeordneten Hohlfadenbündeln mit jeweils mindestens einem Rohrboden derart gestaltet werden, daß das Austauschen der Hohlfadenbündel einfacher und weniger zeitaufwendig erfolgen kann. Außerdem soll das Volumen des Gehäuses möglichst gering gehalten werden. Gleichzeitig sollen jedoch die Vorteile, die sich durch den Einsatz mehrerer Hohlfadenbündel in einem Gehäuse ergeben, erhalten bleiben.

Diese Aufgabe wird bei einem Stoff- und/oder Wärmetauscher, bestehend aus einem Gehäuse und mehreren in diesem Gehäuse angeordneten Hohlfadenbündeln mit jeweils mindestens einem Rohrboden, wobei die Rohrböden der Hohlfadenbündel im Gehäuse derart angeordnet sind, daß im Gehäuse ein Außenraum um die Hohlfäden und ein Innenraum, der aus den Innenhohlräumen der Hohlfäden und einem von den Rohrböden und einem Teil des Gehäuses gebildeten Raum besteht, gebildet ist, und wobei im Gehäuse für den Außen- und Innenraum jeweils mindestens ein Flüssigkeitsanschluß vorgesehen ist, dadurch gelöst, daß die Außenkontur der Rohrböden vieleckig ausgebildet ist, wobei die Längskanten der Außenkontur benachbarter Rohrböden im wesentlichen parallel angeordnet sind, und daß über eine Abdichtung die Rohrböden dicht miteinander verbunden sind.

Durch die vieleckige Ausbildung der Außenkontur kann der Abstand zwischen benachbarten Rohrböden verringert werden. Ein weiterer Vorteil der vieleckigen Außenkontur ergibt sich daraus, daß die Rohrböden dicht aneinander gepackt werden können, so daß die bisher übliche Halteplatte entfallen kann.

Im Prinzip läßt sich die vorliegende Erfindung auch bei Stoff- und/oder Wärmetauschern anwenden, bei denen anstatt Hohlfäden Rohre größerer Querschnittsabmessungen verwendet werden. Doch ergeben sich insbesondere bei Hohlfäden, deren hydraulischer Durchmesser wenige Millimeter oder weniger beträgt, besondere Vorteile: Es können kleinere Einheiten hergestellt werden, die einzeln geprüft werden können, so daß insbesondere bei großen Tauscherflächen, die durch Zusammensetzen der kleineren Einheiten erreicht werden, der Qualitätsstandard gesteigert, die Qualitätskontrolle vereinfacht und der Ausschuß minimiert werden kann. Unterschiedliche Tauscherflächen können aus Standardelementen zusammengesetzt werden, so daß die Herstellung der Standardelemente über eine automatische Fertigung erfolgen kann. Durch die erfindungsgemäße Anordnung wird es möglich, in einem Tauschergehäuse bei gleichbleibendem Volumen, die Tauscherfläche zu steigern.

Die erfindungsgemäßen Stoffaustauscher lassen sich insbesondere bei der Mikrofiltration sowohl bei der Überströmfiltration ("crossflow-filtration") als auch bei der Durchströmfiltration ("dead-end-filtration") anwenden. Bei der Überströmfiltration sind in der Regel an beiden Enden der Hohlfadenbündel jeweils Rohrböden angeordnet, während bei der Durchströmfiltration in der Regel nur ein Rohrboden vorhanden ist, in welchem entweder die Hohlfäden von nur einem Hohlfadenbündelende angeordnet sind (die Hohlfäden sind dann am anderen Hohlfadenbündelende verschlossen, beispielsweise verschweißt) oder die Hohlfäden von beiden Hohlfadenbündelenden angeordnet sind, wobei die Hohlfäden dann die Form eines langgestreckten U's aufweisen. Bei der Durchströmfiltration kann aber auch an beiden Hohlfadenbündelenden ein Rohrboden vorgesehen sein.

Die zu verwendenden Hohlfäden weisen in der Regel einen kreisrunden Querschnitt auf. Sie können jedoch auch andere, beispielsweise elliptische, vieleckige oder ähnliche Querschnittsformen aufweisen.

Als Außenkontur der Rohrböden hat sich eine rechteckige, quadratische, dreieckige oder sechseckige Ausbildung bestens bewährt.

Um eine dichte Verbindung der einzelnen Rohrböden miteinander zu erreichen, ist eine Abdichtung entlang der Längskanten der Außenkontur benachbarter Rohrböden erforderlich. Diese dichte Verbindung kann auf unterschiedliche Weise erreicht werden. Beispielsweise können durch ein umlaufendes Spannband die Rohrböden aneinander gepreßt werden, wobei stirnseitig noch eine Abdichtung vorhanden ist, welche beispielsweise über eine entsprechend ausgebildete Kappe, die mit einem der Flüssigkeitsanschlüsse des Gehäuses in Verbindung steht, gegen die Längskanten der Rohrböden gepreßt wird.

Als besonders vorteilhaft hat es sich herausgestellt, wenn die Abdichtung mit der Außenkontur benachbarter Rohrböden verschweißt ist. Auch hier bietet sich eine Serienfertigung der Abdichtungen als Einzelelemente an, weil diese aus diesen Einzelelementen zusammengesetzt werden können und beim Verschweißen mit den Rohrböden gleichzeitig miteinander verschweißt werden können.

Lediglich für den Flüssigkeitsanschluß für den Innenraum sind für unterschiedliche Tauscherflächen unterschiedliche Anschlußstücke, beispielsweise in Form von Kappen erforderlich. Hinsichtlich der Hohlfadenbündel wird jedoch über die erfindungsgemäßen Stoff- und/oder Wärmetauscher eine Serienfertigung ermöglicht.

Zur Vermeidung von Beschädigungen an den meist sehr empfindlichen Hohlfäden ist es vorteilhaft, wenn zumindest am äußeren Umfang der aus mehreren Hohlfadenbündeln zusammengesetzten Hohlfadenbündelanordnung ein Schutzgitter angeordnet ist. Für eine Serienfertigung bietet sich allerdings an, jedes einzelne Hohlfadenbündel mit einem Schutzgitter zu versehen, wodurch außerdem besonders stabile Hohlfadenbündelanordnungen gebildet werden können.

Die Erfindung wird anhand der nachfolgenden Figuren näher erläutert.

Es zeigen:

Figur 1 die schematische Ansicht der Stirnseite von möglichen Anordnungen bei Verwendung einer sechseckigen Außenkontur bei den Rohrböden,

Figur 2 eine perspektivische Explosionszeichnung einer aus drei Hohlfadenbündel zusammensetzbaren Hohlfadenbündelanordnung.

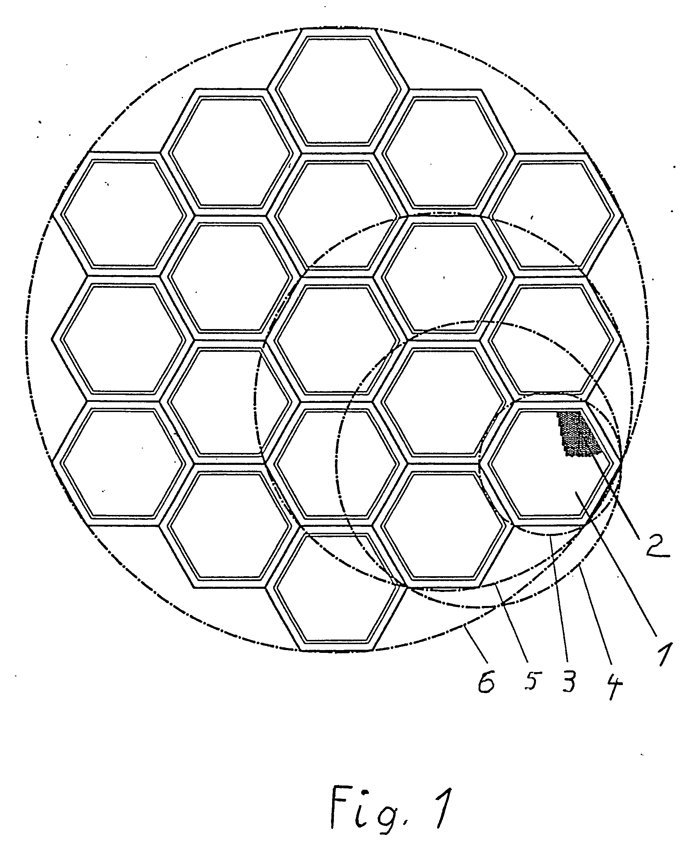

Figur 1 zeigt schematisch die Ansicht der Stirnseiten von verschiedenen Anordnungen, welche bei Verwendung von Rohrböden 1 mit sechseckiger Außenkontur entstehen. Der Übersichtlichkeit halber sind die Enden der Hohlfäden 2 lediglich in einem Teilbereich eines einzigen Rohrbodens eines Hohlfadenbündels dargestellt. Mit 3 ist ein Umkreis um einen einzigen Rohrboden 1 bezeichnet. Bei sechseckiger Außenkontur der Rohrböden können folgende kompakte Anordnungen erreicht werden:

- Zusammenfassung von 3 Rohrböden, entsprechend Umreis 4,
- Zusammenfassung von 7 Rohrböden, entsprechend Umkreis 5,
- Zusammenfassung von 19 Rohrböden, entsprechend Umkreis 6, usw.

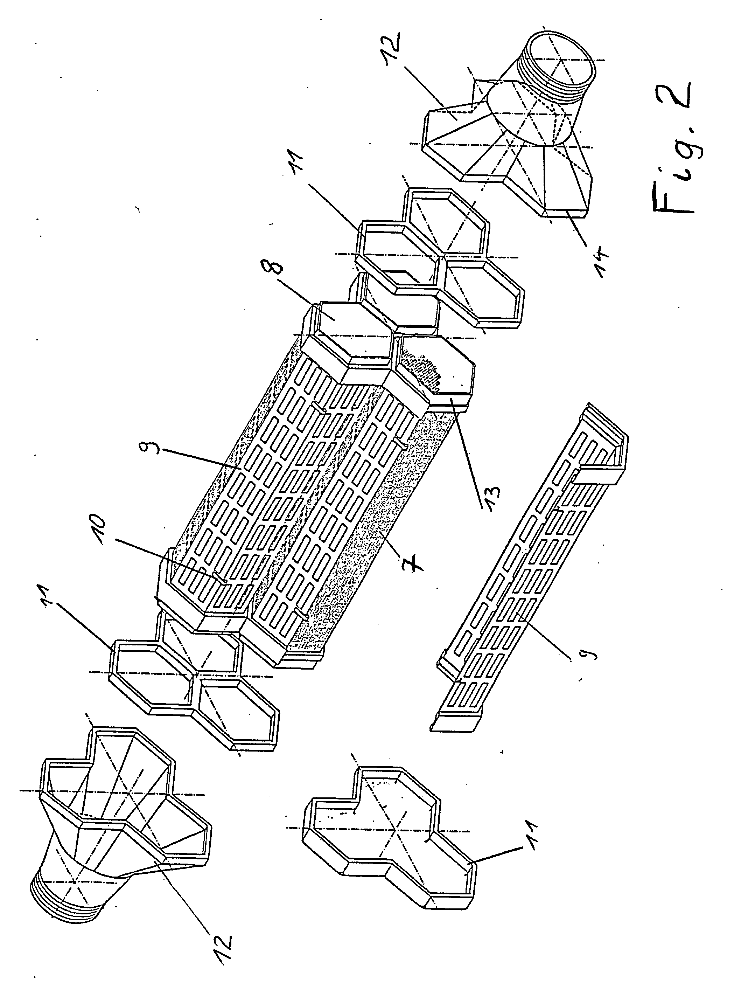

Für drei Hohlfadenbündel ist in Figur 2 eine perspektivische Explosionszeichnung dargestellt. Hierbei ist das dazugehörige Gehäuse des Stoff- und/oder Wärmetauschers nicht dargestellt. Der besseren Übersichtlichkeit wurde eine Anordnung von nur drei Hohlfadenbündeln 7 mit jeweils zwei Rohrböden 8 dargestellt. Die Hohlfadenbündel 7 sind in der Figur 2 teilweise mit Schutzgitter 9 abgedeckt, die untereinander beispielsweise mit Schnappverschlüssen 10 (in der Figur lediglich angedeutet) verbunden sein können. Stirnseitig werden auf die Rohrböden 8 Abdichtungen 11, die sich entlang der Außenlängskanten 13 der Rohrböden 8 erstrecken. aufgesetzt und beispielsweise mit den Rohrböden 8, soweit erforderlich auch mit den Schutzgittern 9, verschweißt. Als Verbindungsstücke für den Flüssigkeitsanschluß im Gehäuse (nicht dargestellt) dienen die beiden Kappen 12, die ebenfalls beispielsweise mit den Abdichtungen entlang der Außenkontur 14 verschweißt werden können.

Es versteht sich von selbst, daß die erfindungsgemäßen Stoff- und/oder Wärmetauscher insbesondere dann besonders günstig herstellbar sind, wenn ale Teile aus demselben Material, insbesondere aus thermoplastischem Kunststoff bestehen.

## Ansprüche

1. Stoff- und/oder Wärmetauscher, bestehend aus einem Gehäuse und mehreren in diesem Gehäuse angeordneten Hohlfadenbündeln mit jeweils mindestens einem Rohrboden, wobei die Rohrböden der Hohlfadenbündel im Gehäuse derart angeordnet sind, daß im Gehäuse ein Außenraum um die Hohlfäden und ein Innenraum, der aus den Innenhohlräumen der Hohlfäden und einem von den Rohrböden und einem Teil des Gehäuses gebildeten Raum besteht, gebildet ist, und wobei im Gehäuse für den Außen- und Innenraum jeweils mindestens ein Flüssigkeitsanschluß vorgesehen ist, dadurch gekennzeichnet, daß die Außenkontur der Rohrböden vieleckig ausgebildet ist, wobei die Längskanten der Außenkontur benachbarter Rohrböden im wesentlichen parallel angeordnet sind, und daß über eine Abdichtung die Rohrböden dicht miteinander verbunden sind.

2. Stoff- und/oder Wärmetauscher nach Anspruch 1, dadurch gekennzeichnet, daß die Außenkontur der Rohrböden rechteckig, quadratisch, dreieckig oder sechseckig ausgebildet ist.

3. Stoff- und/oder Wärmetauscher nach Anspruch 1 oder 7, dadurch gekennzeichnet, daß die Abdichtung mit der Außenkontur benachbarter Rohrböden verschweißt ist.

4. Stoff- und/oder Wärmetauscher nach einem oder mehreren der Ansprüche 1 bis 3, dadurch gekennzeichnet, daß zumindest am äußeren Umfang der Hohlfadenbündelanordnung ein Schutzgitter angeordnet ist.

Fig. 1

AGW2220

Fig. 2